Europäisches Patentamt

European Patent Office

Office européen des brevets

(11) Veröffentlichungsnummer: **0 422 471 B1**

(12) **EUROPÄISCHE PATENTSCHRIFT**

(45) Veröffentlichungstag der Patentschrift: **09.03.94**

(21) Anmeldenummer: **90118752.6**

(22) Anmeldetag: **29.09.90**

(51) Int. Cl.5: **C08G 18/00**, C08G 18/76, C08J 9/08

(54) Verfahren zur Herstellung von Polyurethan-Weichschaumstoffen.

(30) Priorität: **12.10.89 DE 3934098**

(43) Veröffentlichungstag der Anmeldung:
**17.04.91 Patentblatt 91/16**

(45) Bekanntmachung des Hinweises auf die
Patenterteilung:
**09.03.94 Patentblatt 94/10**

(84) Benannte Vertragsstaaten:
**AT BE DE ES FR GB IT SE**

(56) Entgegenhaltungen:
**EP-A- 0 056 939**
**EP-A- 0 309 218**
**DE-A- 2 029 284**
**FR-A- 2 231 705**
**GB-A- 1 479 658**

**Polyurethane Handbook, Hanser Publishers,
Munich 1985, Seiten 202, 203**

(73) Patentinhaber: **BAYER AG**

**D-51368 Leverkusen(DE)**

(72) Erfinder: **Brock, Martin, Dr.**
**Silesiusstrasse 82**
**W-5000 Köln 80(DE)**

**Beschreibung**

Polyurethan-Weichschaumstoffe (Form- oder Blockschaumstoffe) finden eine sehr verbreitete Anwendung. Sie werden u. a. zur Herstellung von Sitz-, Lehnen- oder Kopfpolstern in der Fahrzeug- und Möbelindustrie genutzt.

Entsprechend dem unterschiedlichen Verwendungszweck ist es notwendig, Produkte mit deutlich unterschiedlichen physikalischen Werten z.B. Rohdichte und Stauchhärte herzustellen. Das vielseitige Produktspektrum wird bislang ausschließlich durch Umsetzung von Toluylendiisocyanaten mit Polyether-, Polyesterpolyolen, chemischen und physikalischen Treibmitteln sowie gegebenenfalls weiteren Hilfsmitteln (z.B. Katalysatoren, Stabilisatoren, Emulgatoren, Vernetzern) abgedeckt.

Überraschenderweise wurde nun gefunden, daß auch ein vorteilhafter Einsatz von Isocyanaten vom Typ des Diphenylmethandiisocyanats (MDI) in der Weichschaumstoff-Herstellung möglich ist. Bislang war die Mitverwendung von MDI nur bei der Herstellung von Kaltformschaumstoffen oder unter extremen Bedingungen bekannt.

Mit dem erfindungsgemäßen Verfahren ist es nun möglich, durch Verwendung von speziellen Polyisocyanaten auf Basis von MDI, hochwertige flexible Schaumstoffe herzustellen.

Die Verschäumung erfolgt erfindungsgemäß nach den für die Herstellung von Weichschaumstoffen üblichen Rezepturen. Dabei werden nach dem Verfahren gemäß Erfindung heißhärtende Weichschaumstoffe hergestellt.

Gegenstand der Erfindung ist ein Verfahren zur Herstellung von Polyurethan-Weichschaumstoffen durch Umsetzung von

a) Polyisocyanaten mit

b) Verbindungen mit mindestens zwei gegenüber Isocyanaten aktiven Wasserstoffatomen vom Molekulargewicht 400 bis 10.000 und gegebenenfalls

c) Kettenverlängerungs- und Vernetzungsmitteln mit mindestens zwei gegenüber Isocyanaten aktiven Wasserstoffatomen vom Molekulargewicht 32 - 399 in Gegenwart von

d) Wasser als Treibmittel und gegebenenfalls in Gegenwart von

e) anderen Treibmitteln, Katalysatoren und weiteren an sich bekannten Hilfs- und Zusatzmitteln

das dadurch gekennzeichnet ist, daß

als Polyisocyanate a) solche vom Typ des Diphenylmethandiisocyanats, in denen das monomere Diphenylmethandiisocyanat zu höchstens 80 Gew.-% als 4,4'-Isomeres vorliegt,

und zusätzlich Toluylendiisocyanat verwendet werden, wobei die Umsetzung der Komponenten in einer geschlossener Form unter den üblicher Bedingungen der Heißhärtung erfolgt.

In der Regel enthält das Polyisocyanat a) 1 bis 80 Gew.-%, vorzugsweise 5 bis 70 Gew.-%, noch mehr bevorzugt 10 bis 65 Gew.-%, 4,4'-Diphenylmethan-diisocyanat.

Erfindungsgemäß ist bevorzugt, daß als Polyisocyanat a) solche eingesetzt werden, in denen das monomere Diphenylmethan-diisocyanat mindestens 2 Gew.-%, vorzugsweise mindestens 10 Gew.-%, noch vorteilhafter mindestens 25 Gew.-%, 2,4'-Isomeres enthält. Ferner ist bevorzugt, daß zwei- und/oder mehrwertige Organo-Metallverbindungen, vorzugsweise Zinn (II)-Salze höherer Carbonsäuren, als vernetzende Katalysatoren mitverwendet werden.

Die so hergestellten Polyurethan-Weichschaumstoffe weisen eine Reihe von überraschenden Vorteilen auf.

Zum einen zeichnen sich derartige Schaumstoffe durch hervorragende Druckverformungsrest-Werte aus. Diese physikalische Eigenschaft ist insbesondere im Anwendungsbereich Sitzkissen von entscheidendem Einfluß auf die Qualität.

Weiterhin wurde gefunden, daß durch den Einsatz des erfindungsgemäßen Polyisocyanats in einer Abmischung mit TDI die Härte der Schaumstoffe deutlich beeinflußt wird. Dies kann bei der Herstellung von Schaumstoffen mit unterschiedlichen Härtebereichen von Vorteil sein. Bislang mußten derartige Schaumstoffe durch Zudosierung von Füllstoffpolyethern hergestellt werden. Die Füllstoffpolyether können aufgrund ihrer hohen Viskosität und großen Reaktivität Verarbeitungsprobleme verursachen. Die Zudosierung von MDI stellt ein vergleichsweise einfaches und unproblematisches Verfahren dar.

Die Verarbeitung von Polyisocyanaten gemäß Erfindung erweitert darüber hinaus den anwendbaren Kennzahlbereich auf ca. 80-120. Bislang war bei der Herstellung von flexiblen Schaumstoffen in der Praxis der Kennzahlbereich auf 100 +/- 4 beschränkt. Abweichungen führten oft zu Störungen. Der durch Einsatz des erfindungsgemäßen MDI erweiterte Kennzahlbereich erlaubt dagegen eine größere Verarbeitungssicherheit. Darüber hinaus kann durch Variation der Kennzahl die Schaumstoffhärte beeinflußt werden. Auch das ist ein enormer verfahrenstechnischer Vorteil bei der Herstellung von Produkten mit unterschiedlichen Härtegraden.

Zur Herstellung der erfindungsgemäßen Polyurethan-Weichschaumstoffe werden als Ausgangskomponenten verwendet:

1. Polyisocyanate vom Typ des Diphenylmethan-diisocyanats z.B.: monomeres Diphenylmethandiisocyanat ("MDI"), das höchstens 80 Gew.-% 4,4′-Isomeres und vorzugsweise mindestens 2 Gew.-% 2,4′-Isomeres (vorteilhaft mindestens 10 Gew.-% und noch mehr bevorzugt mindestens 25 Gew.-% 2,4′-Isomeres) enthält, ferner Polyphenylpolymethylen-polyisocyanate (erhalten durch Anilin-Formaldehyd-Kondensation und anschließende Phosgenierung; "rohes MDI") und durch Carbodiimidgruppen, Urethangruppen, Allophanatgruppen, Isocyanuratgruppen, Harnstoffgruppen oder Biuretgruppen modifizierte Polyisocyanate vom Typ der Diphenylmethandiisocyanate sowie alkylsubstituierte MDI-Typen, in denen das monomere Diphenylmethandiisocyanat die obengenannte Zusammensetzung aufweist.

Die genannten Polyisocyanate können selbstverständlich auch in Form von Polyether-, Polyester- oder Polyetheramin-Prepolymeren bzw. beliebiger Abmischungen prepolymerisierter und nicht prepolymerisierter MDI-Typen eingesetzt werden.

Die MDI-Polyisocyanate werden als Gemisch mit Toluylendiisocyanat (TDI)eingesetzt, in dem das TDI bis zu 98 Gew.-% (bezogen auf das Gesamtgemisch, oft bis zu 80 Gew.-%,) enthalten sein kann. In Frage kommt

- Toluylendiisocyanat als Gemisch der 2,4- und 2,6-Isomeren im Verhältnis 80 : 20 (T 80)
- Toluylendiisocyanat als Gemisch der 2,4- und 2,6-Isomeren im Verhältnis 65 : 35 (T 65)
- Toluylendiisocyanat als Prepolymeres.

2. Verbindungen mit mindestens zwei gegenüber Isocyanaten reaktionsfähigen Wasserstoffatomen von einem Molekulargewicht in der Regel von 400 - 10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z. B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z. B. in der DE-OS 2 832 253, Seiten 11 -18, beschrieben werden. Vorzugsweise weisen sie eine OH-Zahl von 28 bis 80 auf.

3. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 - 20, beschrieben.

4. Wasser als Treibmittel in einer Menge von 1 bis 15 Gew.-Teilen, vorzugsweise 3 - 5 Gew.-Teilen, pro 100 Gew.-Teile "Basispolyol" b)

5. Gegebenenfalls werden Hilfs- und Zusatzmittel mitverwendet wie

a) leicht flüchtige organische Substanzen als weitere Treibmittel,

b) Reaktionsbeschleuniger und Reaktionsverzögerer der an sich bekannten Art in den an sich üblichen Mengen,

c) oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z B. auf den Seiten 103-113, beschrieben.

Durchführung des erfindungsgemäßen Verfahrens:

Die Reaktionskomponenten werden erfindungsgemäß nach dem an sich bekannten (bevorzugten) Einstufenverfahren, dem Prepolymerverfahren oder dem Semipräpolymerverfahren zur Umsetzung gebracht, wobei man sich oft maschineller Einrichtungen bedient, z. B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121-205, beschrieben.

Die Umsetzung aller Komponenten erfolgt erfindungsgemäß in der Regel bei einer Kennzahl von 80-120.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter- oder Übervernetzung näher zu definieren. Die Kennzahl errechnet sich nach der allgemeinen Formel wie folgt:

$$\text{Kennzahl} = \frac{\text{Isocyanatmenge (praktisch)} \times 100}{\text{Isocyanatmenge (theoretisch)}}$$

Die Herstellung von flexiblen Polyurethan-Schaumstoffen ist an sich bekannt (vgl. "Kunststoff-Handbuch", Band 7, Polyurethane, herausgegeben von Günter Oertel, Carl-Hanser-Verlag, München, Wien 1983, insbesondere das Kapitel "Weichelastische PUR-Formschaumstoffe" auf den Seiten 212-235).

Erfindungsgemäß wird die Verschäumung in geschlossenen Formen durchgeführt. Dabei wird das Reaktionsgemisch in eine Form eingetragen. Als Formmaterial kommt Metall, z. B. Aluminium oder Kunststoff, z. B. Epoxidharz, in Frage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "over-charging" gearbeitet; eine derartige Verfahrensweise ist z. B. aus den US-Patentschriften 3 178 490 und 3 182 104 bekannt.

Die erfindungsgemäß erhältlichen flexiblen Polyurethan-Schaumstoffe finden z. B. Anwendung als Armaturentafeln, Armlehnen (z.B. PKW-Lehnen), Liege- und Sitzmöbel, Kopfstützen, Sitze in Verkehrsmitteln, vorzugsweise im Auto.

Ausführungsbeispiele 1-6

| | |
|---|---|
| Polyether A | ein Glyzerin-gestarteter, trifunktioneller langkettiger PO/EO-Polyether (ca. 4 % EO) OHZ = 50; MG 3900 |
| Katalysator 1 | Bis-N,N′-dimethyl-amino-diethylether (30 %), Dipropylenglykol (70 %) |
| Katalysator 2 | Zinn(II)-dioctoat |
| Stabilisator OS 32 | Polysiloxan-Schaumstabilisator (Handelsprodukt der Bayer AG) |
| T 80 | Toluylendiisocyanat, Gemisch aus 2,4- und 2,6-Isomeren im Gewichtsverhältnis 80:20 |
| T 65 | Toluylendiisocyanat, Gemisch aus 2,4- und 2,6-Isomeren im Gewichtsverhältnis 65:35 |
| M 50 | Diphenylmethandiisocyanat, Gemisch der 2,4′- und 4,4′-Isomeren im Gewichtsverhältnis 50:50 |
| M 6 | rohes Diphenylmethandiisocyanat mit einem Gehalt von 60 Gew.-% an 4,4′-und 25 Gew.-% an 2,4′-Diphenylmethandiisocyanat |

Alle Komponenten werden intensiv miteinander vermischt und in einer geschlossenen Form (22 x 22 x 7 cm) verschäumt.

Die physikalischen Daten der resultierenden Schaumstoffe gehen aus der Tabelle hervor.

| Beispiel | 1 | 2 | 3 | 4 | 5 | 6 |
|---|---|---|---|---|---|---|
| Polyether A | 100 | 100 | 100 | 100 | 100 | 100 |
| Wasser | 3,0 | 3,0 | 3,0 | 3,0 | 3,0 | 3,4 |
| Katalysator 1 | 0,15 | 0,15 | 0,15 | 0,15 | 0,15 | 0,15 |
| Katalysator 2 | 0,1 | 0,05 | 0,05 | 0,06 | 0,1 | 0,03 |
| Stabilisator OS 32 | 1,0 | 1,0 | 1,0 | 1,0 | 1,0 | 1,0 |
| Kennzahl | 100 | 100 | 110 | 100 | 90 | 100 |
| T 80 | - | - | - | - | - | 95 |
| T 65 | 95 | 80 | 85 | 85 | 85 | - |
| M 5 | - | - | 15 | 15 | 15 | - |
| M 6 | 5 | 20 | - | - | - | 5 |
| Rohdichte (kg/m$^3$) | 41 | 38 | 38 | 36 | 36 | 32 |
| Stauchhärte 40 % (kPa) | 5,8 | 3,6 | 5,0 | 3,9 | 3,3 | 3,3 |
| Druckverformungsrest | | | | | | |
| bei 50 % Verformung | - | - | - | - | - | 0,6 |
| bei 75 % Verformung | - | - | - | - | - | 1,5 |

**Patentansprüche**

1. Verfahren zur Herstellung von Polyurethan-Weichformschaumstoffen durch Umsetzung von
   a) Polyisocyanaten mit
   b) Verbindungen mit mindestens zwei gegenüber Isocyanaten aktiven Wasserstoffatomen vom Molekulargewicht 400 bis 10.000 und gegebenenfalls
   c) Kettenverlängerungs- und Vernetzungsmitteln mit mindestens zwei gegenüber Isocyanaten aktiven Wasserstoffatomen vom Molekulargewicht 32 - 399 in Gegenwart von
   d) Wasser als Treibmittel und gegebenenfalls in Gegenwart von
   e) anderen Treibmitteln, Katalysatoren und weiteren an sich bekannten Hilfs- und Zusatzmitteln
   dadurch gekennzeichnet, daß
   als Polyisocyanate a) solche vom Typ des Diphenylmethan-diisocyanats, in denen das monomere Diphenylmethandiisocyanat zu höchstens 80 Gew.-% als 4,4'-Isomeres vorliegt, und zusätzlich Toluylendiisocyanat verwendet werden, wobei die Umsetzung der Komponenten m einer geschlossenen Form unter den üblichen Bedingungen der Heißhärtung erfolgt.

2. Verfahren gemäß Anspruch 1, dadurch gekennzeichnet, daß solche Polyisocyanate a) vom Typ des Diphenylmethan-diisocyanats verwendet werden, in denen das monomere Diphenylmethan-diisocyanat mindestens 2 Gew.-%, bevorzugt 10 Gew.-% vorzugsweise mindestens 25 Gew.-%, 2,4'-Isomeres enthält.

3. Verfahren nach Anspruch 1 und 2, dadurch gekennzeichnet, daß zwei- und/oder mehrwertige Organo-Metallverbindungen, vorzugsweise Zinn (II)-Salze höherer Carbonsäuren, als vernetzende Katalysatoren mitverwendet werden.

**Claims**

1. A process for the production of flexible moulded polyurethane foams by reaction of
   a) polyisocyanates with
   b) compounds containing at least two isocyanate-reactive hydrogen atoms and having a molecular weight in the range from 400 to 10,000 and optionally
   c) chain-extending and crosslinking agents containing at least two isocyanate-reactive hydrogen atoms and having a molecular weight in the range from 32 to 399 in the presence of
   d) water as blowing agent and optionally in the presence of
   e) further blowing agents, catalysts and other auxiliaries and additives known per se,
   characterized in that polyisocyanates of the diphenylmethane diisocyanate type, in which at most 80% by weight of the monomeric diphenylmethane diisocyanate is present as the 4,4'-isomer, and tolylene diisocyanate are used as the polyisocyanates a), the reaction of the components taking place in a closed mold and under typical heat-curing conditions.

2. A process as claimed in claim 1, characterized in that polyisocyanates of the diphenylmethane diisocyanate type, in which the monomeric diphenyl methane diisocyanate contains at least 2% by weight, preferably 10% by weight and, more preferably, at least 25% by weight 2,4'-isomer, are used as the polyisocyanates a).

3. A process as claimed in claims 1 and 2, characterized in that difunctional and polyfunctional organometallic compounds, preferably tin(II) salts of higher carboxylic acids, are used as crosslinking catalysts.

**Revendications**

1. Procédé de production de mousses flexibles de polyuréthanne par réaction
   a) de polyisocyanates avec
   b) des composés portant au moins deux atomes d'hydrogène actifs vis-à-vis d'isocyanates, d'un poids moléculaire de 400 à 10 000 et, le cas échéant
   c) des agents d'allongement de chaîne et des agents de réticulation portant au moins deux atomes d'hydrogène actifs vis-à-vis d'isocyanates, d'un poids moléculaire de 32 à 399 en présence
   d) d'eau comme agent porogène et, le cas échéant, en présence

e) d'autres agents porogènes, de catalyseurs et d'autres substances auxiliaires et additifs connus, caractérisé en ce qu'on utilise comme polyisocyanates a) des composés du type du diphénylméthane-diisocyanate, dans lesquels le diphénylméthanediisocyanate monomère est présent au maximum en proportion de 80 % en poids sous forme de l'isomère 4,4', et en outre du diisocyanato-toluène, la réaction des composants étant conduite dans un moule fermé dans les conditions classiques d'un durcissement à chaud.

2.  Procédé suivant la revendication 1, caractérisé en ce qu'on utilise des polyisocyanates a) du type du diphénylméthanediisocyanate, dans lesquels le diphénylméthane-diisocyanate monomère contient au moins 2 % en poids, de préférence au moins 10 % en poids et notamment au moins 25 % en poids de l'isomère 2,4'.

3.  Procédé suivant les revendications 1 et 2, caractérisé en ce qu'on utilise comme catalyseurs de réticulation des composés organo-métalliques divalents et/ou de valence supérieure à deux, de préférence des sels d'étain (II) d'acides carboxyliques supérieurs.